## Europäisches Patentamt

(19) **European Patent Office**

**Office européen des brevets**

(11) Veröffentlichungsnummer: **0 118 125**
**A2**

(12) # EUROPÄISCHE PATENTANMELDUNG

(21) Anmeldenummer: **84102285.8**

(22) Anmeldetag: **03.03.84**

(51) Int. Cl.³: **G 01 S 7/44**
**G 01 S 7/52**

(30) Priorität: **05.03.83 DE 3307872**

(43) Veröffentlichungstag der Anmeldung:
**12.09.84 Patentblatt 84/37**

(84) Benannte Vertragsstaaten:
**AT BE CH FR GB IT LI LU NL SE**

(71) Anmelder: **Fried. Krupp Gesellschaft mit beschränkter Haftung**
**Altendorfer Strasse 103**
**D-4300 Essen 1(DE)**

(72) Erfinder: **Ziese, Rolf**
**Fohlenweide 12**
**D-2800 Bremen(DE)**

(54) Verfahren zur Darstellung von im Polarkoordinaten-Format vorliegenden digitalisierten Daten einer Panorama-Abtastvorrichtung, wie einer Radar-, Sonaranlage od.dgl., auf einem Bildschirmraster mit kartesischen Koordinaten.

(57) Es wird ein Verfahren zur Darstellung von im Polarkoordinaten-Format vorliegenden Daten einer Panorama-Abtastvorrichtung, z. B. Radaranlage, auf einem Bildschirmraster mit kartesischen Ko-ordinaten angegeben, bei welchem die Daten nach Koordinatentransformation in einen in kartesischen Koordinaten adressierbaren Bildspeicher mit einer dem Bildschirmraster entsprechenden Speicherorganisation eingeschrieben und aus dem Bildspeicher zeilen- oder spaltenweise ausgelesen und auf dem Bildschirm sichtbar gemacht werden. Zum Zwecke der Datenreduktion ohne Verschlechterung der Auflösung des Panoramabildes wird das Inkrement der Winkelkoordinate ein Vielfaches größer gewählt als die azimutale Auflösung des Bildspeichers und liegt vorzugsweise zwischen dem halben und vollen Öffnungswinkel des Abtastgliedes der Panorama-Abtast-vorrichtung. Für jedes Polarkoordinaten-Wertepaar wird entsprechend der azimutalen Auflösung des Bildspeichers ein redundanzfreier Satz von kartesischen Einschreibadressen, dessen obere und untere Grenze durch das Winkel-koordinateninkrement bestimmt sind, derart generiert, daß durch die Gesamtheit der Adressensätze alle für die Panoramadarstellung erforderlichen Speicherplätze des Bildspeichers adressierbar sind. In die unter den Adressensätzen jeweils aufrufbaren Speicherplätze werden jeweils die gleichen Daten eingeschrieben.

EP 0 118 125 A2

Croydon Printing Company Ltd.

FRIED. KRUPP GESELLSCHAFT MIT BESCHRÄNKTER HAFTUNG
in Essen

Verfahren zur Darstellung von im Polarkoordinaten-Format vorliegenden digitalisierten Daten einer Panorama-Abtastvorrichtung, wie einer Radar-, Sonaranlage od. dgl., auf einem Bildschirmraster mit kartesischen Koordinaten

================================================================

Die Erfindung betrifft ein Verfahren zur Darstellung von im Polarkoordinaten-Format vorliegenden digitalisierten Daten einer Panorama-Abtastvorrichtung, wie einer Radar-, Sonaranlage od. dgl., auf einem Bildschirmraster mit kartesischen Koordinaten der im Oberbegriff des Anspruchs 1 angegebenen Art.

Bei einem solchen Verfahren ist es erforderlich, die Koordinatentransformation von Polarkoordinaten in kartesische Koordinaten flächendeckend durchzuführen, d. h. alle Speicherplätze des Bildspeichers und damit alle Bildpunkte des Bildschirmrasters zu belegen. Hierzu wird bei einem bekannten Verfahren der eingangs genannten Art die Inkrementierung der Winkelkoordinate entsprechend der azimutalen Auflösung des Bildspeichers gewählt. Unter der azimutalen Auflösung des Bildspeichers wird derjenige Winkel $\sigma$ verstanden, der sich als Differenz der in Winkelkoordinaten umgerechneten x- oder y-Adressen zweier benachbarter Speicherplätze ergibt, die in der Speichermatrix einen Abstand N von dem durch die Adressen x = 0, y = 0 festgelegten Speicherplatz haben, wobei N die Zahl der Entfernungsinkremente ist, in welche der Entfernungsmeßbereich der Panorama-Abtastvorrichtung unterteilt ist. Beispielsweise ergibt sich für eine Vollbild-Panoramadarstellung auf einem Bildschirm mit einem Bildschirmraster von 1024 x 1024 Bildpunkten und einer dementsprechenden Speicherorganisation des Bildspeichers von 1024 x 1024 Speicherplätzen die Zahl N der Entfernungsinkremente bei voller Ausnutzung des Bildspeichers für die Darstellung zu 512. Die azimutale Auflösung $\sigma$ des Bildspeichers beträgt nach dem vorher Gesagten mit $x_1 = N \cdot \sin \varphi_1$ und $x_2 = N \cdot \sin \varphi_2$

$$\sigma = \varphi_2 - \varphi_1 = \frac{\arcsin x_2}{N} - \frac{\arcsin x_1}{N} \quad .$$

Benachbarte Speicherplätze mit Abstand N 512 von dem in der Mitte der Speichermatrix liegenden Ursprungs-Speicherplatz weisen dann z. B. die x-Adressen $x_1 = 0$ und $x_2 = 1$ bei einem Azimutwinkel von $0^o$ und die x-Adressen $x_1 = 512/\sqrt{2} = 362$, $x_2 = 362+1 = 363$ bei einem Azimutwinkel von $45^o$ auf. Damit ergibt sich aus obigen Gleichungen die maximale Auflösung $\sigma_{max} = 0,11^o$ und die minimale Auflösung $\sigma_{min} = 0,16^o$. Die mittlere azimutale Auflösung des Bildspeichers beträgt somit $\sigma = 0,13^o$.

Für eine flächendeckende Koordinatentransformation muß daher die Inkrementierung der Winkelkoordinate $\Delta\varphi = 0,11^o$ betragen. Dies ergibt eine extrem hohe Zahl an Aufnahmedaten und Koordinatenwandlungen und den damit verbundenen Einschreibvorgängen in den Bildspeicher, wobei zwangsläufig Einschreibvorgänge in redundanten Adressen vorgenommen werden. Die Vielzahl der Einschreibvorgänge lassen in aller Regel den Einsatz höchstintegrierter Speicherbausteine - z. B. 64 K-Speicherelemente -, der aus Kosten- und Raumgründen äußerst interessant wäre, nicht mehr zu, da selbst bei zeitlicher Ineinanderschachtelung der Aufnahme- und Wiedergabevorgänge die große Zahl der hier erforderlichen Einschreibvorgänge nicht in der für die Aufnahme im Speicherbaustein verfügbaren Zeit bewältigt werden kann.

Der Erfindung liegt die Aufgabe zugrunde, ein Verfahren der eingangs genannten Art zu schaffen, durch welches die Zahl der Einschreibvorgänge in den Bildspeicher wesentlich reduziert und dadurch der Einsatz hochintegrierter Bausteine ermöglicht wird. Zusätzlich soll eine vorteilhafte Schaltungsanordnung zur Realisierung des Verfahrens angegeben werden.

Die Aufgabe ist bei einem Verfahren der im Oberbegriff des Anspruchs 1 angegebenen Art erfindungsgemäß durch die Merkmale im Kennzeichenteil des Anspruchs 1 gelöst.

Bei dem erfindungsgemäßen Verfahren wird durch Vergrößerung des Inkrements der Winkelkoordinate die Zahl der Daten zunächst reduziert. Wenn die Inkrementierung dabei gemäß Anspruch 2 bemessen wird, gehen trotzdem für die Darstellung keinerlei Informationen verloren, da bedingt durch den Öffnungswinkel des Abtastgliedes, also der Radarantenne oder der Sonarbasis, in diesem Winkelbereich von dem Abtastglied nur Mittelwerte geliefert werden, somit bei einer feineren Inkrementierung, z. B. entsprechend der azimutalen Auflösung des Bildspeichers, für jede Speiche in diesem dem Öffnungswinkel des Abtastgliedes entsprechenden Winkelbereich ohnehin identische Daten anstehen. Den pro Winkelinkrement angelieferten Daten wird nunmehr pro Entfernungskoordinate ein redundanzfreier Satz von kartesischen Einschreibadressen zugeordnet, derart, daß durch die Gesamtheit der Adressen pro Winkelinkrement in alle, durch die räumliche Lage des jeweiligen Winkelinkrementes und die Reichweite bestimmten Speicherplätze des Bildspeichers nur einmal eingeschrieben werden kann, und zwar jeweils das gleiche Datum für jeden Adressensatz. Dadurch wird die Zahl der Einschreibvorgänge gegenüber dem bekannten Verfahren um den Faktor 2 reduziert. Das bedeutet, daß für die Aufnahme gegenüber dem bekannten Verfahren nur noch die Hälfte der Zeit erforderlich ist, so daß bei gleichbleibender Umlaufgeschwindigkeit des Abtastgliedes der Panorama-Abtastvorrichtung anstelle von bisher 16 K-Speicherelementen nunmehr die Verwendung von 64 K-Speicherelementen möglich ist. Umgekehrt kann natürlich auch bei konstanter Speicherelementgröße von 16 K die Umlaufgeschwindigkeit des Abtastgliedes erhöht werden.

Eine vorteilhafte Ausgestaltung des erfindungsgemäßen Verfahrens ergibt sich aus Anspruch 3. Durch diese Verfahrensschritte kann in einfacher Weise ein redundanzfreier Satz von kartesischen Einschreibadressen erstellt werden.

Das erfindungsgemäße Verfahren läßt sich mit einer Schaltungsanordnung, wie sie in Anspruch 4 und den folgenden Ansprüchen charakterisiert ist, in vorteilhafter Weise realisieren.

Die Erfindung ist anhand eines in der Zeichnung dargestellten Ausführungsbeispiels im folgenden näher beschrieben. Es zeigen:

Fig. 1   ein Blockschaltbild einer Schaltungsanordnung zur Darstellung von
im Polarkoordinaten-Format vorliegenden digitalisierten Daten einer
Radaranlage auf einem Bildschirmraster mit kartesischen Koordinaten,

Fig. 2   eine prinzipielle Darstellung eines
Bildschirmrasters eines Bildschirms
gemäß Fig. 1, ausschnittsweise,

Fig. 3   eine Schaltungsanordnung eines Redundanzprüfers in Fig. 1.

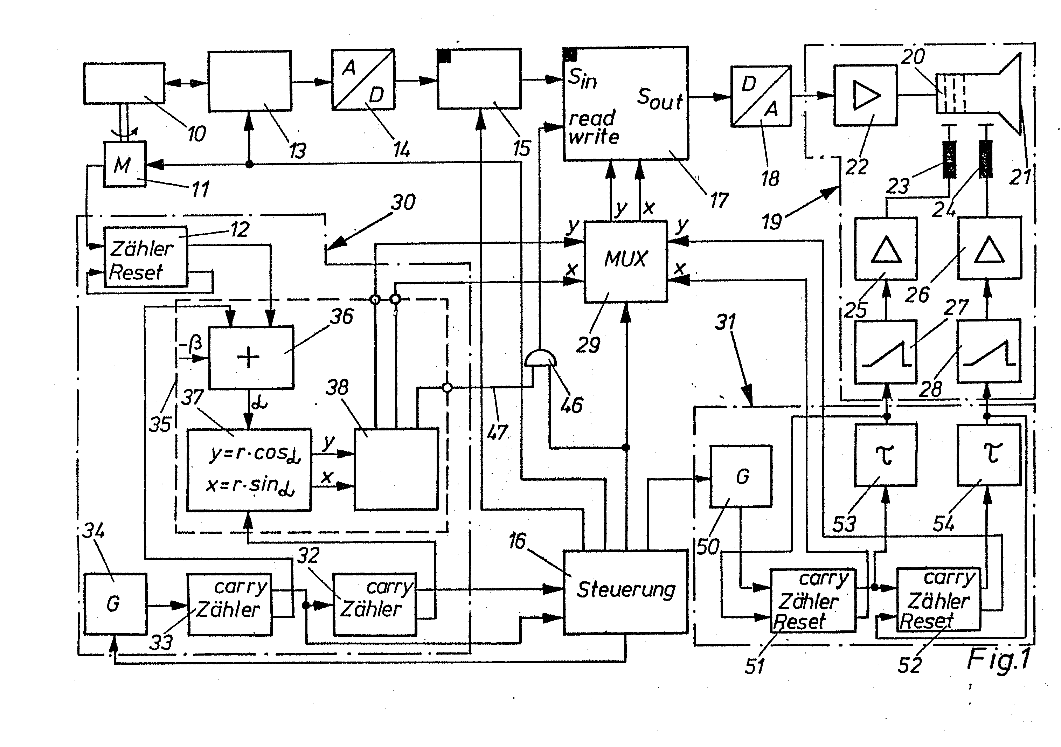

Die in Fig. 1 im Blockschaltbild schematisch dargestellte Vorrichtung zur Darstellung von im Polar-
koordinaten-Format vorliegenden Daten einer Radaranlage auf einem Bildschirmraster mit kartesischen
Koordinaten weist eine Radarantenne 10 auf, die von
einem Schrittmotor 11 angetrieben wird. Die Radarantenne weist in bekannter Weise einen Öffnungswinkel Θ auf und wird von dem Schrittmotor 11 im Azimut schrittweise um das Winkelinkrement $\Delta\varphi$ gedreht.
Nach k Winkelschritten der Radarantenne 10 um das
Winkelinkrement $\Delta\varphi$ ist der Horizont von der Radarantenne einmal vollständig erfaßt. Die Zahl der
Schaltschritte des Schrittmotors 11 werden von einem
Winkelinkrement-Zähler 12 gezählt, der bei Zählerstand $k\cdot\Delta\varphi$ zurückgesetzt wird.

Die Radarantenne 10 ist mit einer Sende- und Empfangsvorrichtung 13 verbunden. Diese bekannte Sende- und Empfangsvorrichtung 13 erzeugt in bekannter
Weise HF-Impulse, die über die Radarantenne 10 ausgesendet werden, und zwar pro Winkelstellung der Radarantenne 10 einen Impuls. Die von der Radaranten-

ne 10 pro Azimutwinkelstellung empfangenen Echos werden der Sende- und Empfangsvorrichtung 13 zugeführt, dort aufbereitet und nach Analog-/Digital-Wandlung in einem Analog-/Digital-Wandler 14 in einem Zwischenspeicher 15 abgelegt. Das Ablegen in dem Zwischenspeicher 15 erfolgt zeitseriell, wobei jeder Speicherplatz einer Entfernungskoordinate zugeordnet ist. Bei einem in n gleiche Entfernungsinkremente $\Delta r$ unterteilten Entfernungsmeßbereich der Radareinrichtung muß der Zwischenspeicher 15 n Speicherplätze aufweisen. Das Auslösen des Sendeimpulses, das Weiterschalten des Schrittmotors 11 um das azimutale Winkelinkrement $\Delta \varphi$ und das Einschreiben der von der Radarantenne 10 abgegebenen digitalisierten Daten, also die digitalisierten Amplitudenwerte der Echos, in den Zwischenspeicher 15 wird von einer Steuervorrichtung 16 synchronisiert, die noch weitere Synchronisations- und Steuervorgänge ausübt.

Die Vorrichtung weist ferner einen in kartesischen Koordinaten x, y adressierbaren Bildspeicher 17 auf, dessen Dateneingang $S_{in}$ mit dem Ausgang des Zwischenspeichers 15 und dessen Datenausgang $S_{out}$ über einen Digital-/Analog-Wandler 18 mit einer elektronischen Anzeigeeinheit 19 zur Sichtbarmachung des Inhalts des Bildspeichers 17 verbunden ist. Die Anzeigeeinheit 19 kann z. B. ein Fernsehgerät sein, das in bekannter Weise eine Bildröhre 20, einen Bildschirm 21 mit einem kartesischen Bildraster aus p x q Bildpunkten, einen zwischen Digital-/Analog-Wandler 18 und Bildröhre 20 eingeschalteten Verstärker 22 und ein Ablenkspulensystem aus zwei Ablenkspulen 23, 24 aufweist, die über jeweils einen Verstärker 25, 26 mit einem Sägezahngenerator 27 bzw. 28 verbunden sind, wobei der Sägezahngenerator 27 die Horizontalablenkung und der Sägezahngenerator 28 die Vertikalablenkung des Elektronenstrahls der Bildröhre 20 bewirkt.

Die Adress-Eingänge x, y des Bildspeichers 17 sind an einem Multiplexer 29 angeschlossen, dessen Steuereingang ebenso wie der Steuerbefehleingang "read/write" des Bildspeichers 17 mit einem Ausgang der Steuervorrichtung 16 verbunden ist. Entsprechend einem von der Steuervorrichtung 16 auf diese beiden Steuerleitungen gegebenen write- bzw. read-Befehl sind die Adress-Eingänge x, y des Bildspeichers 17 mit einem Schreibadressierkreis 30 bzw. einem Leseadressierkreis 31 verbunden.

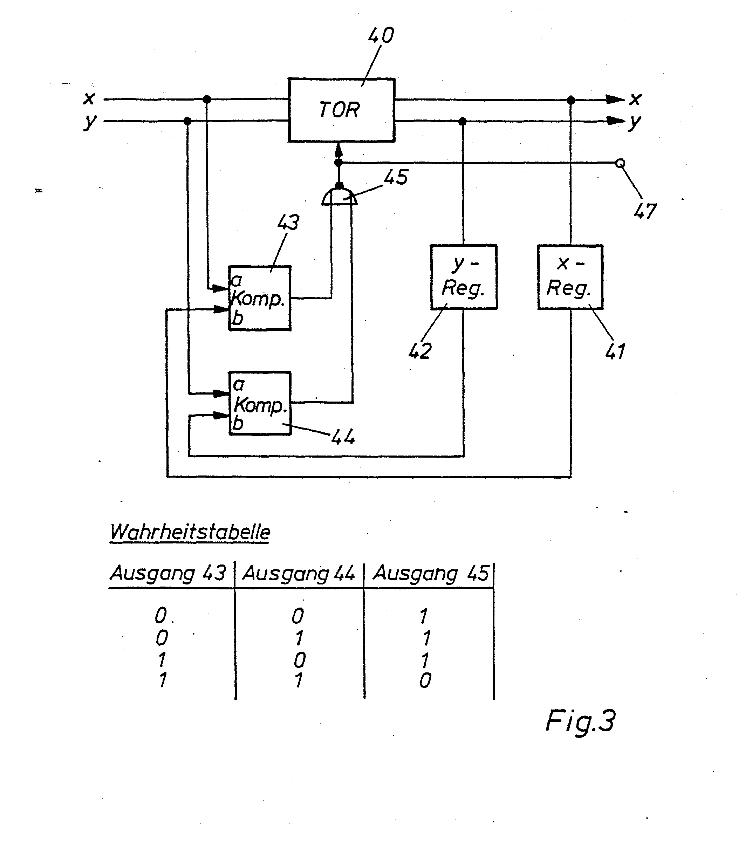

Der Schreibadressierkreis 30 zum Einschreiben der jeweils in dem Zwischenspeicher 15 abgespeicherten n digitalen Zwischenspeicherwerte einer durch eine Winkelkoordinate $\varphi = h \cdot \Delta\varphi$ bestimmten sog. Radarspeiche umfaßt neben dem eingangs erwähnten Winkelinkrement-Zähler 12 zur Erfassung der azimutalen Winkelstellung der Radarantenne 10 noch einen Entfernungsinkrement-Zähler 32, dessen Zählkapazität n ist, also der Speicherkapazität des Zwischenspeichers 15 entspricht, einen Stufenzähler 33, dessen Zählkapazität gleich dem Quotienten aus Winkelinkrement $\Delta\varphi$ und der azimutalen Auflösung $\sigma$ des Bildspeichers 17 ist, einen mit dem Zähleingang des Stufenzählers 33 verbundenen Taktgenerator 34 und ein Rechenwerk 35. Das Rechenwerk 35 weist einen Addierer 36, einen Koordinatentransformator 37 und einen Redundanzprüfer 38 auf, der im einzelnen in Fig. 3 dargestellt ist. Der Koordinatentransformator 37 ist ein Sinus- und Kosinus-Netzwerk, das aus einem noch nachstehend erläuterten Winkel $\alpha$ und aus einer vorgegebenen Entfernungskoordinate r die kartesischen Koordinaten x, y

nach den Gleichungen

$$y = r \cdot \cos \alpha$$

$$x = r \cdot \sin \alpha$$

berechnet. Der Ausgang des Stufenzählers 33 und der Ausgang des Winkelinkrement-Zählers 12 sind mit den beiden Eingängen des Addierers 36 verbunden. Der Übertrag-Ausgang des Stufenzählers 33 ist einerseits mit dem Zähleingang des Entfernungsinkrement-Zählers 32 und andererseits mit der Steuervorrichtung 16 verbunden, an die ebenfalls der Übertrag-Ausgang des Winkelinkrement-Zählers 32 geführt ist. Der Ausgang des Winkelinkrement-Zählers 32 ist ebenso wie der Ausgang des Addierers 36 mit dem Koordinatentransformator 37 verbunden. Die beiden die kartesischen Adressen x, y führenden Ausgänge des Koordinatentransformators 37 sind über den Redundanzprüfer 38 mit dem Multiplexer 29 verbunden. Der Taktgenerator 34 wird von der Steuervorrichtung 16 gestartet und ist mit dieser über eine Steuerleitung verbunden.

Der Einschreibvorgang der von der Radarantenne 10 gelieferten Daten in den Bildspeicher 17 geht folgendermaßen vor sich:

Sobald die Radarantenne 10 um ein Winkelinkrement $\Delta\varphi$ gedreht ist, wird durch die Steuervorrichtung 16 in der Sende- und Empfangsvorrichtung 13 ein Sendeimpuls ausgelöst, der über die Radarantenne 10 entsprechend ihrer Drehung im Azimut unter der Winkelkoordinate $\varphi = h \cdot \Delta\varphi$ abgestrahlt wird. Das Winkelinkrement $\Delta\varphi$ der schrittweisen Antennendrehung ist dabei größer gewählt, als die azimutale Auflösung $\sigma$ des Bildspeichers 17, wie sie eingangs definiert ist. Da auf dem Bildschirm 21 der Anzeigeeinheit 19 das gesamte $360°$-

Panoramabild des von der Radarantenne 10 abgetasteten Horizonts dargestellt und dabei der Bildspeicher 17 voll genutzt werden soll, beträgt die maximale azimutale Auflösung $\sigma_{max}$ des Bild-speichers nach dem eingangs Ausgeführten

$$\sigma_{max} = \text{arc sin } \frac{1}{n} \quad .$$

Die obere und untere Grenze der Größe des azimu-talen Winkelinkrements $\Delta\varphi$ wird in Anpassung an den Öffnungswinkel $\theta$ der Radarantenne 10 gewählt, und zwar wird das Winkelinkrement $\Delta\varphi$ nicht größer als der volle und nicht wesentlich kleiner als der hal-be Öffnungswinkel $\theta$ bemessen.

Bei einem Bildraster des Bildschirms 21 von z. B. $p \times q$  1024 x 1024 Bildpunkten und einer Speicherorganisation des Bildspeichers 17 von 1024 x 1024 z-bit-Speicherplätzen wird die Entfernungsinkrementierung so festgelegt, daß die Reichweite der Radarantenne 10 in n = 512 gleiche Entfernungsinkremen-te $\Delta r$ unterteilt ist. Die azimutale Auflösung des Bildspeichers 17 beträgt dann 0,11°. Bei einem Öffnungswinkel der Radarantenne 10 von $\theta$ = 0,88° wird das Winkelinkrement z. B. zu $\Delta\varphi$= 0,44° gewählt. Die Zählkapazität des Entfernungsinkrement-Zählers 32 beträgt dann 9 bit, die des Stufenzählers 33 0,44/0,11 = 4 = 2 bit, die des Winkelinkrement-Zählers 12  360/0,44 ≈ 818 = 10 bit.

Nach Abstrahlen des Sendeimpulses wird die Sende-und Empfangsvorrichtung 13 von der Steuervorrichtung 16 auf Empfang geschaltet. Aus dem von der Radarantenne 10 unter der Winkelkoordinate $\varphi$ = h·$\Delta\varphi$ empfangenen Empfangssignal werden nach Aufbereitung und nach Analog-/Digital-Wandlung erhaltene Abtastwerte in den Zwischenspeicher 15 sukzessive eingeschrieben. Die Abtastfrequenz, mit welcher die Abtastung bzw. Einschreibung in den Zwischenspeicher 15 vorgenommen wird, ist ein zeitliches Äquivalent zu der Entfernungsinkrementierung $\Delta r$ und wird von der Steuervorrichtung 16 geliefert. Im Zwischenspeicher 15 sind somit nach Abschluß des Signalempfangs für eine Winkelkoordinate $\varphi = h \cdot \Delta \varphi$ und n Entfernungsinkremente $\Delta r$ n digitale Daten abgespeichert, deren Polarkoordinaten durch den jeweiligen Speicherplatz im Zwischenspeicher 15 (Entfernungskoordinate $r = i \cdot \Delta r$) und durch den Zählerinhalt des Winkelinkrement-Zählers 12 ( Winkelkoordinate $\varphi = h \cdot \Delta \varphi$) bestimmt sind.

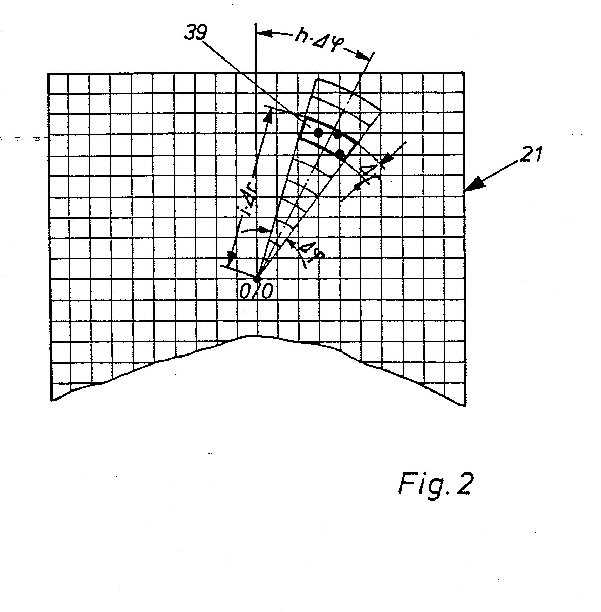

Sobald die Zwischenspeicherung der Daten im Zwischenspeicher 15 beendet ist, wird von der Steuervorrichtung 16 der Taktgenerator 34 gestartet und damit der Schreibadressierkreis 30 in Funktion gesetzt. Der Schreibadressierkreis 30 ist derart ausgebildet, daß für jeden im Zwischenspeicher 15 abgespeicherten Zwischenspeicherwert ein redundanzfreier Satz von Schreibadressen x, y generiert wird, derart, daß mittels der dem Schreibadressensatz zugeordneten Speicherplätze des Bildspeichers 17 alle Bildpunkte des Bildschirmrasters 21, die von einem Kreissegment 39 (Fig. 2) überdeckt werden, beim Auslesen des Bildspeichers 17 belegbar sind. Das in Fig. 2 prinzipiell dargestellte Kreisringsegment 39 ist durch die Polarkoordinate $r = i \cdot \Delta r$, $\varphi = h \cdot \Delta \varphi$ des jeweiligen Zwischenspeicherwertes bestimmt und durch die Winkel- und Entfernungsinkremente $\Delta \varphi$, $\Delta r$ begrenzt. Durch die Gesamtheit der redundanzfreien Adressensätze sind somit trotz einer Winkelinkrementierung, die größer ist als die azimutale Auflö-

sung $\sigma$ des Bildspeichers 17, alle für die Panorama-darstellung erforderlichen Speicherplätze des Bild-speichers 17 adressierbar.

Zur Erzeugung dieser n redundanzfreien Adressensätze für jede sog. Radarspeiche, also für die n im Zwischenspeicher 15 abgelegten Zwischenspeicherwerte, wird der Zählerinhalt des Stufenzählers 33 zu dem Zählerinhalt des Winkelinkrement-Zählers 12, der die Winkelkoordinate $\varphi$ repräsentiert, hinzuaddiert. Aus Gründen der symmetrischen Lage des Kreissegments 39 zu der Winkelkoordinate $\varphi = h \cdot \Delta\varphi$ wird im Addierer 36 zusätzlich noch ein konstanter Winkel-betrag $\beta$ hinzuaddiert. Der Addierer 36 errechnet den Winkel $\alpha$ gemäß Gleichung

$$\alpha = (h \cdot \Delta\varphi) + \beta + (m \cdot \sigma) \ ,$$

wobei $h \cdot \Delta\varphi$ der Zählerstand des Winkelinkrement-Zäh-lers 12 und $m \cdot \sigma$ der Zählerstand des Winkelstufen-zählers 33 ist. Bei dem im vorhergehenden Abschnitt gewählten Beispiel mit $\Delta\varphi = 0,44^{\circ}$ und $\sigma = 0,11^{\circ}$ wird der Winkel $\beta$ mit $-0,15^{\circ}$ gewählt. Bei einem dem Azi-mutwinkel $\varphi = 100^{\circ}$ entsprechenden Zählerstand des Winkelinkrement-Zählers 12 z. B. werden je nach Zählerstand des Stufenzählers 33 folgende Winkel-werte $\alpha$ an den Koordinatentransformator 37 ausgegeben:

$$\alpha_0 = 100^{\circ} - 0,15^{\circ} + 0 \cdot 0,11^{\circ} = 99,85^{\circ}$$
$$\alpha_1 = 100^{\circ} - 0,15^{\circ} + 1 \cdot 0,11^{\circ} = 99,96^{\circ}$$
$$\alpha_2 = 100^{\circ} - 0,15^{\circ} + 2 \cdot 0,11^{\circ} = 100,07^{\circ}$$
$$\alpha_3 = 100^{\circ} - 0,15^{\circ} + 3 \cdot 0,11^{\circ} = 100,18^{\circ} \ .$$

Für die nachfolgende Winkelkoordinate von $\varphi = 100,44^{\circ}$ sehen die Werte von $\alpha$ wie folgt aus :

$$\alpha_0 \quad 100,44^\circ - 0,15^\circ + 0 \cdot 0,11^\circ. \ 100,29^\circ$$
$$\alpha_1 = 100,44^\circ - 0,15^\circ + 1 \cdot 0,11^\circ = 100,40^\circ$$
$$\alpha_2 = 100,44^\circ - 0,15^\circ + 2 \cdot 0,11^\circ = 100,51^\circ$$
$$\alpha_3 = 100,44^\circ - 0,15^\circ + 3 \cdot 0,11^\circ = 100,62^\circ.$$

Mit jeder Entfernungskoordinate $r$  $i \cdot \Delta r$, die durch den Zählerstand des Entfernungsinkrement-Zählers 32 bestimmt wird, und einem Satz $\alpha$-Werte $\alpha_0$ bis $\alpha_3$ bestimmt der Koordinatentransformator 37 mit den angegebenen Gleichungen eine Vielzahl kartesischer x- und y-Koordinaten, die durch entsprechende Rundung in die kartesischen Adressen des Bildspeichers 17 überführt und jeweils dem Redundanzprüfer 38 zugeführt werden. Bei dem gewählten Beispiel werden somit für jede Winkelkoordinate $\varphi$  $h \cdot \Delta \varphi$ 512 Sätze von jeweils vier y- und vier x-Adressen erstellt, wobei sukzessive jeweils ein Satz von kartesischen Adressen auf Redundanz geprüft und redundante Adressen ausgeschieden werden.

Der in Fig. 3 dargestellte Redundanzprüfer 38 weist ein Torglied 40 auf, mittels welchem die Adressleitungen x, y zwischen Koordinatentransformator 37 und Multiplexer 29 gesperrt bzw. bei Redundanzfreiheit der momentan vom Koordinatentransformator 37 ausgegebenen Adresse x, y freigegeben werden, so daß vom Redundanzprüfer 38 nur redundanzfreie Adressen als Einschreibadressen an den Bildspeicher 17 gelangen. Zur Prüfung der Redundanz bzw. der Redundanzfreiheit der am Torglied jeweils anstehenden Adresse x, y sind ein x-Register 41 und ein y-Register 42 zum Speichern jeweils einer x-Koordinate bzw. einer zugehörigen y-Koordinate einer Adresse und zwei Komparatoren 43, 44 zum Vergleichen der aktuell am Torglied anstehenden Adresse mit der vorhergehenden Adresse vorgesehen. Der Komparator 43 ist eingangsseitig einerseits mit der x-Adressleitung und andererseits mit dem x-Register 41 verbunden, während der Komparator 44 eingangsseitig an die y-Adressleitung und an das y-Register 42 angeschlossen ist. Die Ausgänge der Komparatoren 43, 44 sind mit einem NOR-Glied 45 verbunden, an dessen Ausgang der Steuereingang des Torgliedes 40 gelegt ist. Die Funktion des Redundanzprüfers 48 ist der in Fig. 3 angegebenen Wahrheitstabelle ohne weiteres zu entnehmen, wobei zu beachten ist, daß die Ausgänge der Komparatoren 43, 44 logisch "1" sind, wenn die Eingangssignale gleich sind, und logisch "0" annehmen, wenn die Eingangssignale ungleich sind. Ein logisch "1"-Signal am Ausgang des NOR-Gliedes 45 öffnet das Torglied 40 und durch logisch "0" wird das Torglied 40 geschlossen. Die jeweils bei offenem Torglied 40 als Einschreibadresse zu dem Multiplexer 29 gelangende Adresse x, y wird jeweils in den beiden Registern 41, 42 gespeichert.

Vom Ausgangssignal des NOR-Gliedes 45 wird gleichzeitig ein Einschreibbefehl für den Bildspeicher 17 abgeleitet. Hierzu ist der Ausgang des NOR-Gliedes 45 über eine Steuerleitung 47 mit einem AND-Glied 46 verbunden, das von der Steuervorrichtung 16 bei einem write-Befehl gesetzt und bei einem read-Befehl gesperrt wird. Der Ausgang des AND-Gliedes 46 ist mit dem Steuerbefehleingang "read/write" des Bildspeichers 17 verbunden. Ist das AND-Glied 46 von der Steuervorrichtung 16 gesetzt, so wird mit Auftreten eines Ausgangssignals logisch "1" am NOR-Glied 45 ein Einschreibbefehl an den Bildspeicher 17 gegeben. Mit jedem an den Entfernungsinkrement-Zäh-

- 14 -

0118125

ler 32 und damit auch an die Steuervorrichtung 16 gelangenden Zählimpuls wird jeweils ein Zwischenspeicherwert aus dem Zwischenspeicher 15, der ein einfaches Schieberegister sein kann, ausgelesen und steht als z-bit-Digitalwert am Dateneingang $S_{in}$ des Bildspeichers 17 an. Dieser Zwischenspeicherwert wird unter jeder zu einem redundanzfreien Adressensatz gehörigen Einschreibadresse x, y in den dieser zugeordneten Speicherplatz des Bildspeichers 17 eingelesen. Ein redundanzfreier Adressensatz kann bei dem vorstehend angegebenen Zahlenbeispiel maximal vier Einschreibadressen und minimal eine Einschreibadresse aufweisen.

Zum zeilenweisen Auslesen des Bildspeicherinhalts weist der an sich bekannte Schreibadressierkreis 31 einen Taktgenerator 50, einen Zeilenzähler 51, dessen Zähleingang mit dem Ausgang des Taktgenerators 50 verbunden ist, und einen Spaltenzähler 52 auf, dessen Zähleingang mit dem Übertrag-Ausgang "carry" des Zeilenzählers 51 verbunden ist. Der Übertrag-Ausgang "carry" von Zeilenzähler 51 und Spaltenzähler 52 ist mit jeweils einem Verzögerungsglied 53 bzw. 54 verbunden. Der Ausgang des Verzögerungsglieds 53 triggert den Sägezahngenerator 27 für die Horizontalablenkung und der Ausgang des Verzögerungsglieds 54 den Sägezahngenerator 28 für die Vertikalablenkung. Die Verzögerungsglieder 53, 54 sind so ausgelegt, daß bei einem Eingangssignal ein Ausgangssignal von solcher zeitlichen Länge ansteht, die mindestens der Rücklaufzeit des Elektronenstrahls der Bildröhre 20 vom Zeilenende zum Zeilenanfang bzw. Bildende zum Bildanfang entspricht. Der Ausgang des Verzögerungsglieds 53 ist mit dem Reset-Eingang des Zeilenzählers 51 verbunden, und der Ausgang des Verzögerungsglieds 54 mit dem Reset-Eingang des Spaltenzählers 52.

Die Zählausgänge von Zeilenzähler 51 und Spaltenzähler 52 sind über den Multiplexer 29 mit den
Adress-Eingängen x, y des Bildspeichers 17 verbunden. Die Verbindung wird hergestellt, sobald
die Steuervorrichtung 16 einen read-
Befehl ausgibt und damit gleichzeitig den Taktgenerator 50 des Leseadressierkreises 31 startet.
Mit einer Lesewiederholfrequenz von 50 Hz und einer Speicherorganisation von 1024 x 1024 z-bit-
Speicherplätzen beträgt die Taktfrequenz des Generators 50  26 MHz.

Die Erfindung ist nicht auf das vorstehend beschriebene Ausführungsbeispiel der Vorrichtung
beschränkt. So ist es nicht zwingend erforderlich, die redundanzfreien Sätze von kartesischen
Einschreibadressen x, y für jedes Polarkoordina-
ten-Wertepaar r, φ in der beschriebenen Weise zu generieren. Die Gesamtheit der redundanzfreien Adressensätze kann ebenso nach einmaliger Berechnung in
einem Speicher in Zuordnung zu den Polarkoordinaten-Wertepaaren abgelegt werden. Da durch die vorgegebene Inkrementierung der Polarkoordinaten immer die gleichen Winkel- und Entfernungskoordinaten auftreten, kann durch Anlegen eines Polarkoordinaten-Wertepaares an den Speicher der jeweilige  redundanzfreie Satz von kartesischen Einschreibadressen x, y aus dem Speicher abgerufen werden.

Ferner ist es nicht zwingend, die Radarantenne 10
mit einem Schrittmotor 11 anzutreiben, dessen Schaltschritt gleich der Inkrementierung der Winkelkoordinate bemessen ist. Es ist ebenso möglich, die Radarantenne mit konstanter Rotationsgeschwindigkeit
stetig umlaufen zu lassen und deren Drehstellung
mit einem inkrementalen Drehwinkelgeber zu erfassen.

Der Zählerinhalt des Winkelinkrement-Zählers 12 muß dann zusätzlich der Steuervorrichtung 16 zugeführt werden, die dann den Sende- und Empfangsvorgang der Sende- und Empfangsvorrichtung 13 mit der Drehstellung der Radarantenne 10 synchronisiert.

- . - . - . -

PATENTANSPRÜCHE

1. Verfahren zur Darstellung von im Polarkoordinaten-Format vorliegenden digitalisierten Daten einer Panorama-Abtastvorrichtung, wie einer Radar-, Sonaranlage od. dgl., auf einem Bildschirmraster mit kartesischen Koordinaten, bei welchem die Daten nach Koordinatentransformation in einen in kartesischen Koordinaten adressierbaren Bildspeicher mit einer dem Bildschirmraster entsprechenden Speicherorganisation eingeschrieben und aus dem Bildspeicher zeilen- oder spaltenweise ausgelesen und auf dem Bildschirm sichtbar gemacht werden, dadurch gekennzeichnet, daß das Inkrement $(\Delta\varphi)$ der Winkelkoordinate $(\varphi)$ um ein Vielfaches größer gewählt wird als die azimutale Auflösung $(\sigma)$ des Bildspeichers (17), daß jedem Polarkoordinaten-Wertepaar $(r,\varphi)$ ein der azimutalen Auflösung $(\sigma)$ des Bildspeichers (17) entsprechender, redundanzfreier Satz von kartesischen Einschreibadressen, dessen obere und untere Grenze durch das Winkelkoordinateninkrement $(\Delta\varphi)$ bestimmt sind, derart zugeordnet wird, daß durch die Gesamtheit der Einschreibadressensätze alle für die Panoramadarstellung erforderlichen Speicherplätze des Bildspeichers (17) adressierbar sind, und daß in die unter den Einschreibadressensätzen jeweils aufrufbaren Speicherplätze des Bildspeichers (17) jeweils die gleichen, den zugeordneten Polarkoordinaten-Wertepaaren $(r,\varphi)$ zugehörigen Daten eingeschrieben werden.

2. Verfahren nach Anspruch 1, dadurch gekennzeichnet, daß das Winkelkoordinateninkrement $(\Delta\varphi)$ in Anpassung an den Öffnungswinkel $(\theta)$ eines Abtastgliedes der Panorama-Abtastvorrichtung, wie der Radarantenne (10) oder der Sonarbasis, gewählt wird und vorzugsweise daß das Winkelinkrement $(\Delta\varphi)$ nicht größer als der volle und nicht wesentlich kleiner als der halbe Öffnungswinkel $(\theta)$ bemessen wird.

3. Verfahren nach Anspruch 1 oder 2, dadurch gekennzeichnet, daß für die Zuordnung des redundanzfreien Satzes von kartesischen Einschreibadressen (x, y) jedes Polarkoordinaten-Wertepaar $(r,\varphi)$ einer Koordinatentransformation unterzogen und dabei die Winkelkoordinate $(\varphi)$ um einen der azimutalen Auflösung $(\delta)$ des Bildspeichers (17) entsprechenden Winkelbetrag stufenweise variiert wird, wobei die Anzahl (m) der Stufen gleich dem Quotienten aus Winkelkoordinateninkrement $(\Delta\varphi)$ und azimutaler Auflösung $(\delta)$ des Bildspeichers (17) ist, und daß aus den gewonnenen kartesischen Koordinaten (x, y) sich ergebende redundante Adressen eliminiert werden.

4. Vorrichtung zum Durchführen des Verfahrens nach einem der Ansprüche 1 bis 3, mit einer Panorama-Abtastvorrichtung, wie Radar-, Sonaranlage od. dgl., deren Entfernungsmeßbereich in n gleiche Entfernungsinkremente und deren Azimutalmeßbereich in k gleiche Winkelinkremente unterteilt ist, mit einem Zwischenspeicher zum zeitweisen Abspeichern von jeweils n digitalen Daten einer durch eine Winkelkoordinate bestimmten Speiche, mit einem in kartesischen Koordinaten adressierbaren Bildspeicher mit p x q Speicherplätzen,
mit einem Schreibadressierkreis zum Einschreiben der Zwischenspeicherwerte in den Bildspeicher, mit einem Leseadressierkreis zum zeilen- oder spaltenweisen Auslesen des Bildspeichers und mit einem ein kartesisches Raster aus p x q Bildpunkten aufweisenden Bildschirm zum Sichtbarmachen des ausgelesenen Speicherinhalts, dadurch gekennzeichnet, daß die Winkelinkremente ($\Delta\varphi$) ein Vielfaches größer sind als der arcus sinus des Kehrwertes der Anzahl n der Entfernungsinkremente ($\Delta r$) der Speiche und daß der Schreibadressierkreis (30) derart ausgebildet ist, daß für jeden Zwischenspeicherwert des Zwischenspeichers (15) ein redundanzfreier Satz von Schreibadressen (x, y) abruf- oder generierbar ist, derart, daß mittels der dem Schreibadressensatz zugeordneten Speicherplätze des Bildspeichers (17) alle Bildpunkte des Bildschirmrasters, die von einem durch die Polarkoordinaten (r, $\varphi$) des Zwischenspeicherwertes bestimmten und durch die Winkel- und Entfernungsinkremente ($\Delta\varphi$, $\Delta r$) begrenzten Kreisringsegment (39) überdeckt werden, beim Auslesen des Bildspeichers (17) belegbar sind, und daß unter jeder Einzeladresse (x, y) eines Schreibadressensatzes der gleiche Zwischenspeicherwert eingeschrieben wird.

5. Vorrichtung nach Anspruch 4, dadurch gekennzeichnet, daß die Winkelinkremente ($\Delta\varphi$) nicht größer als der volle und nicht wesentlich kleiner als der halbe Öffnungswinkel ($\theta$) eines Abtastgliedes der Panorama-Abtastvorrichtung, z. B. der Radarantenne (10), ist.

6. Vorrichtung nach Anspruch 4 oder 5, dadurch gekennzeichnet, daß der Schreibadressierkreis (30) einen Winkelinkrement-Zähler (12), einen Entfernungsinkrement-Zähler (32) und einen Stufenzähler (33) aufweist, die mit einem Rechenwerk (35) verbunden sind, und daß das Rechenwerk (35) einen mit den Ausgängen von Winkelinkrement-Zähler (12) und Stufenzähler (33) verbundenen Addierer (36), einen mit den Ausgängen von Addierer (36) und Entfernungsinkrement-Zähler (32) verbundenen Koordinatentransformator (37) und einen dem Koordinatentransformator (37) nachgeschalteten Redundanzprüfer (38) aufweist.

7. Vorrichtung nach Anspruch 6, dadurch gekennzeichnet, daß der Stufenzähler (33) ein Überlaufzähler ist, dessen Übertrag-Ausgang (carry) mit dem Zähleingang des Entfernungsinkrement-Zählers (32) verbunden ist.

8. Vorrichtung nach Anspruch 7, dadurch gekennzeichnet, daß die Zählkapazität des Stufenzählers (33) gleich dem Quotienten aus dem Winkelinkrement ($\Delta\varphi$) und dem arcus sinus des Kehrwertes der Anzahl n der Entfernungsinkremente ($\Delta r$) der Speiche ist.

9. Vorrichtung nach einem der Ansprüche 6 bis 8, dadurch gekennzeichnet, daß der Redundanzprüfer (38) ein Torglied (40), dessen Eingänge mit dem Ausgang des Koordinatentransformators (37) verbunden und dessen Ausgänge mit den Adress-Eingängen des Bildspeichers (17) verbindbar sind, und einen jeweils mit zwei zeitlich aufeinanderfolgenden Wertepaaren der von dem Koordinatentransformator (37) ausgegebenen kartesischen Adressen belegten Vergleicher (43, 44, 45) aufweist, der bei Identität der Wertepaare ein Sperrsignal und bei Nichtidentität ein Öffnungssignal an das Torglied (40) gibt.

-.-.-.-.-.-.-.-.-.-.-

Fig.1

Fig. 2

### Wahrheitstabelle

| Ausgang 43 | Ausgang 44 | Ausgang 45 |
|------------|------------|------------|
| 0 | 0 | 1 |
| 0 | 1 | 1 |
| 1 | 0 | 1 |
| 1 | 1 | 0 |

Fig.3